# EUROPEAN PATENT SPECIFICATION

(11) **EP 4 075 953 B1**
(45) Date of publication and mention of the grant of the patent: **21.01.2026**
(21) Application number: 20828371.3
(22) Date of filing: 10.12.2020
(51) Int. Cl.: A01J 5/017, A01J 7/04

(54) **A PREPARATION ROBOT FOR PREPARING THE TEATS OF AN ANIMAL, A TEAT PREPARATION ARRANGEMENT AND A METHOD OF PREPARING TEATS**
VORBEREITUNGSROBOTER ZUR VORBEREITUNG DER ZITZEN EINES TIERES, ZITZENVORBEREITUNGSANORDNUNG UND VERFAHREN ZUR VORBEREITUNG VON ZITZEN
ROBOT DE PRÉPARATION POUR PRÉPARER LES TRAYONS D'UN ANIMAL, AGENCEMENT DE PRÉPARATION DE TRAYONS ET PROCÉDÉ DE PRÉPARATION DE TRAYONS

(30) Priority: 17.12.2019 SE 1951473
(43) Date of publication of application: 26.10.2022
(73) Proprietor: DeLaval Holding AB, 147 21 Tumba (SE)
(72) Inventor: WIKLANDER, Björn, 147 21 Tumba (SE); XIANG, Fulin, 147 21 Tumba (SE)
(74) Representative: DeLaval International AB
(86) International application number: PCT/SE2020/051195
(87) International publication number: WO 2021/126050

(56) References cited:
- WO-A1-00/74472
- WO-A1-03/098998
- WO-A1-2016/073261
- US-A1- 2018 249 670

## Description

### TECHNICAL FIELD OF THE INVENTION

The present invention refers generally to the preparation of the teats of animal to be milked, comprising cleaning of the teats. More precisely, the present invention refers to a preparation robot configured for preparing the teats of an animal to be milked according to the preamble of claim 1.

The invention also refers to a teat preparation arrangement comprising two preparation robots.

Furthermore, the invention refers to a method of preparing teats of an animal to be milked by means of a preparation robot.

### BACKGROUND OF THE INVENTION AND PRIOR ART

In a rotary parlour milking plant, it is difficult to realize a high quality cleaning and further preparation of the teats of the animal to be milked due to the very limited time period available. The rotary platform of the parlour rotates at a speed determined by the average time required for milking of one animal. The speed determines the specific time period during which one milking place housing one animal is present within reach for a milking robot for attaching the teatcups. This time period is typically 8-12 s. The time period also forms the time period available for performing a preparation of the teats, including for instance cleaning, stimulation and fore-milking of one or more of the teats of an animal.

EP 1217885 discloses an apparatus for cleaning the teat of an animal. The apparatus comprises a substantially cylindrical teat cleaning cup to be attached to the teat to be cleaned. The teat cleaning cup comprises nozzle means for injecting a cleaning liquid into the teat cleaning cup and drainage means for draining used cleaning liquid from the teat cleaning cup.

US 2012/0216748 discloses a milking arrangement comprising a rotary platform for receiving a number of animals to be milked and a robotic device. The robotic device comprises a preparation robot for cleaning of the teats of the animals, an attachment robot for applying the teatcups to the teats of the animals and a post dip robot for applying sanitizing agent to the teats of the animals.

EP 2 939 533 and WO2016073261A1 disclose a double grab mountable onto an arm of a milking machine for applying automatically teat cups to an udder of an animal to be milked, the double grab comprising a first housing part provided with a first magnet designed for holding a first teat cup, and a second housing part, installed substantially in a horizontal plane next to the first housing part, and provided with a second magnet designed for holding a second teat cup. Each housing part is provided with pivoting means that are activatable separately, designed to make the relative housing part pivot around a pivoting axis which in use extends substantially in a horizontal direction, substantially in widthwise direction of the arm.

### SUMMARY OF THE INVENTION

The purpose of the present invention is to overcome the problems discussed above. It is aimed at an efficient and proper preparation of the teats of an animal to be milked. In particular, it is aimed at an efficient and proper preparation of the teats of the animal present on a rotary platform.

The purpose is achieved by the preparation robot according to claim 1.

The attached first teat-preparing cup and the detachable second teat-preparing cup enables an efficient and proper teat preparation to be performed for two of the teats in one operation, i.e. during the available time period discussed above. The two other teats may be prepared in a second following operation by the same first and second teat-preparing cups or by the first and second teat-preparing cups of another automatic handing device. For instance, the operation of the automatic cleaning device may comprise moving the outer robot arm member with the first and second teat-preparing cups to a position beneath the one of teats, attaching the second teat-preparing cup to said one of the teats, detaching the second teat-preparing cup from the outer robot arm member, moving the outer robot arm member and the first teat-preparing cup to a position beneath another of the teats, attaching the first teat-preparing cup to said another teat, preparing the teats and then withdrawing the outer robot arm member thereby removing the first and second teat-preparing cups from the respective teat and retracting the second teat-preparing cup to a seat of the outer robot arm member.

According to the invention, the second teat-preparing cup is attached to a flexible line and connected to the outer robot arm member via the flexible line. The second teat-preparing cup may thus be detached from a seat of the outer robot arm member but still be connected to the outer robot arm member via the flexible line so that the second teat-preparing cup is freely movable within a range determined by the length of the flexible line.

According to the invention, the flexible line is extensible from and retractable to the outer robot arm member, thereby permitting the second teat-preparing cup to be movable between a proximate position in a seat of the outer robot arm member and remote position at a distance from the seat. The second teat-preparing cup may thus be held in the seat when the outer robot arm member is moved to and from the animal.

According to an embodiment of the invention, the preparation robot comprises a drive mechanism engaging the flexible line and configured to exert a force on the flexible line to retract the flexible line and move the second teat-preparing cup to the proximate position in the seat. The second teat-preparing cup may thus be automatically moved to the proximate position in the seat by an automatic retraction of the flexible line by the drive mechanism. Such an automatic retraction may be performed immediately after the teat preparation has been finished.

According to an embodiment of the invention, the outer robot arm member comprises two guide rollers at an outer end of the outer robot arm member, wherein the flexible line is held between the two guide rollers to permit the flexible line to be extensible from and retractable to outer robot arm member.

According to an embodiment of the invention, the two guide rollers are rotatable around a respective roller axis, wherein the two roller axes are parallel with each other.

According to an embodiment of the invention, at least a further guide roller is provided outside the two guide rollers and wherein the further guide roller is rotatable around a further roller axis being perpendicular to the roller axes.

According to an embodiment of the invention, the flexible line comprises a supply hose for supplying cleaning liquid to the second teat-preparing cup. The supply hose may form the force-transmitting element of the flexible line acting on the second teat-preparing cup when retracting the flexible line. The supply hose may be connected to a cleaning device that may have a container for the cleaning liquid.

According to an embodiment of the invention, a supply hose for supplying cleaning liquid to the first teat-preparing cup is provided. Also the supply hose for the first teat-preparing cup may be connected to the cleaning device and the container for the cleaning liquid.

According to an embodiment of the invention, the first teat-preparing cup and the second teat-preparing cup are connected to a respective flexible discharge hose for discharging liquid from the inner space of the first teat-preparing cup and the second teat-preparing cup, respectively. The discharge hoses may be connected to the cleaning device, which may be provided with means for receiving and/or draining the cleaning liquid used. The cleaning device may also be provided with means for receiving and collecting milk from a fore-milking operation. The liquid, and possible fore-milk, may be discharged from the inner space by being sucked through the discharge hose by an under pressure, i.e. vacuum.

According to an embodiment of the invention, at least the second teat-preparing cup comprises a lip delimiting an opening to the inner space and configured to seal around the teat received in the inner space. The lip may ensure that the teat-preparing cup is held on the teat during the teat preparation also when the second teat-preparing cup is detached from the outer robot arm member.

According to an embodiment of the invention, each of the first and second teat-preparing cups comprises an outer shell and at least one nozzle being directed towards the inner space.

According to an embodiment of the invention, each of the first and second teat-preparing cup comprises an inner shell and an interspace between the outer shell and inner shell, wherein the inner shell comprises a plurality of apertures each forming one of said nozzles.

According to an embodiment of the invention, the preparation robot comprises a camera configured for viewing the first and second teat-preparing cups and communicating with a control unit of the preparation robot. The camera may be mounted to the outer robot arm member.

The purpose is also achieved by the teat preparation arrangement initially defined, which comprises two preparation robots as defined above, wherein the preparation robots are arranged beside each other to enable simultaneous preparation of two of the teats of a respective animal being present beside each other on a rotary platform of a milking parlour.

The purpose is also achieved by the method initially defined, which comprises the steps of:
moving the outer robot arm member with the first and second teat-preparing cups to position the second teat-preparing cup beneath one of teats,
attaching the second teat-preparing cup to said one of the teats, detaching the second teat-preparing cup from the outer robot arm member and moving the outer robot arm member with the first teat-preparing cup to position the first teat-preparing cup beneath another of the teats,
attaching the first teat-preparing cup to said another teat,
preparing the teats attached to the second teat-preparing cup and first teat-preparing cup, respectively, and
withdrawing the outer robot arm member thereby removing the first and second teat-preparing cups from the respective teat and retracting the second teat-preparing cup to a seat of the outer robot arm member.

### BRIEF DESCRIPTION OF THE DRAWINGS

The invention should now be explained more closely through a description of various embodiments and with reference to the drawings attached hereto.
- Fig 1: discloses a view of a teat preparation arrangement with two preparation robots according to an embodiment of the invention.
- Fig 2: discloses a side view of an outer robot arm member of one of the preparation robots in Fig 1 with a teat-preparing cup in a proximate position.
- Fig 3: discloses a view from above of the outer robot arm member in Fig 2.
- Fig 4: discloses a side view of the outer robot arm member of one of the preparation robots in Fig 1 with the second teat-preparing cup in a remote position.
- Fig 5: discloses a side view of the second teat-preparing cup of the outer robot arm member in Fig 2.

### DETAILED DESCRIPTION OF VARIOUS EMBODIMENTS

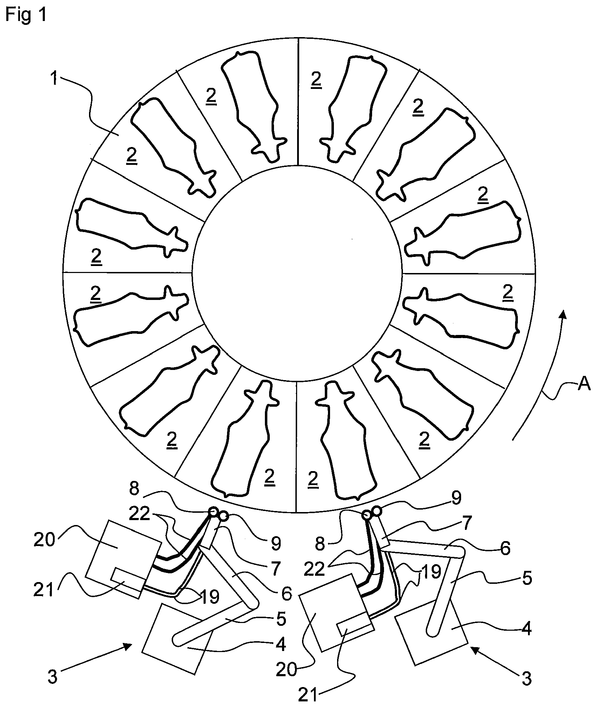

Fig 1 discloses a teat preparation arrangement provided beside a rotary platform 1 having milking equipment (not disclosed) and a number of milking places 2, each configured to receive an animal to be milked. The rotary platform 1 is configured to rotate in the direction A at a determined speed. The teat preparation arrangement comprises two preparation robots 3 arranged beside each other outside a respective milking place 2 of the rotary platform 1.

Each of the preparation robots 3 comprises a base 4 and a robot arm arrangement connected to and movable in relation to the base 4. The robot arm arrangement comprises a number of robot arm members, in the embodiments disclosed a first robot arm member 5, a second robot arm member 6 connected to the first robot arm member 5, and an outer robot arm member 7 connected to the second robot arm member 6.

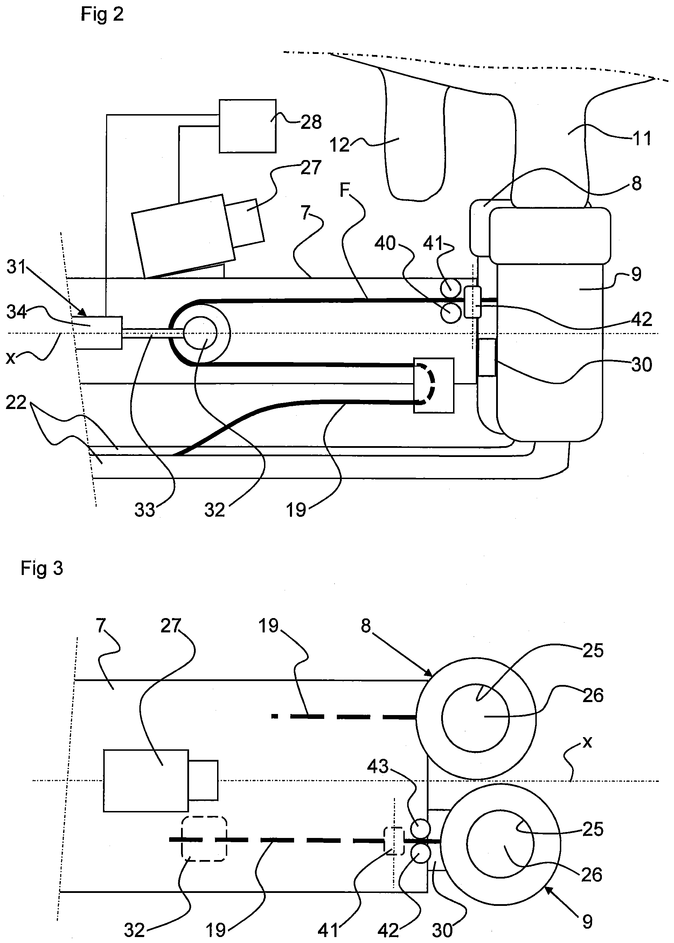

The outer robot arm member 7 has a longitudinal central axis x and may have an elongated shape extending along the longitudinal central axis x, see Fig 2.

The preparation robot 3 also comprises a first teat-preparing cup 8 and a second teat-preparing cup 9. The first and second teat-preparing cups 8, 9 are provided at an outer end of the outer robot arm member 7 as can be seen in Figs 1-3.

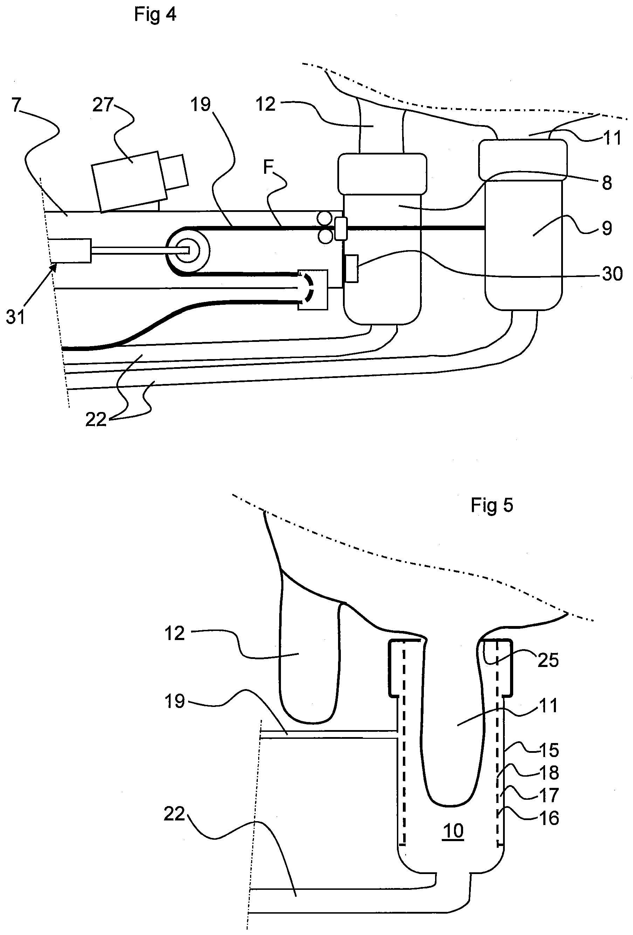

Each of the first and second teat-preparing cups 8, 9 comprises an inner space 10 for receiving one of the teats 11, 12 of the animal, see Fig 5. In the Figs 2-5, only two teats 11, 12 of the normally four teats of the animal have been shown.

Each of the first and second teat-preparing cups 8, 9 comprises an outer shell 15 enclosing the inner space. At least one nozzle is directed towards the inner space 10. Furthermore, each of the first and second teat-preparing cups 8, 9 comprises an inner shell 16 and an interspace 17 between the outer shell 15 and inner shell 16. The inner shell 16 comprises a plurality of apertures 18 each forming one of said at least one nozzle.

A respective supply hose 19 for the supply of cleaning liquid extends from a cleaning device 20 to the first teat-preparing cup 8 and the second teat-preparing cup 9, respectively. The cleaning device 20 may comprise a container 21 for the cleaning liquid to be supplied. The supply hose 19 may connect to a side of the first teat-preparing cup 8 and the second teat-preparing cup 9, respectively, i.e. between a lower end and an opposite upper end of the first teat-preparing cup 8 and the second teat-preparing cup 9, respectively.

Each of the first teat-preparing cup 8 and the second teat-preparing cup 9 is connected to a respective flexible discharge hose 22 for discharging liquid from the inner space 10 of the first teat-preparing cup 8 and the second teat-preparing cup 9, respectively. The discharge hose 22 may extend from the lower end of the first teat-preparing cup 8 and the second teat-preparing cup 9, respectively.

In the embodiment disclosed, each of the first teat-preparing cup 8 and the second teat-preparing cup 9 comprises a lip 25 delimiting an opening 26 to the inner space 10. The lip 25 is configured to seal around the teat 11, 12 received in the inner space 10. The opening 26 may extend through the upper end of the first teat-preparing cup 8 and the second teat-preparing cup 9, respectively.

It should be noted that only the second teat-preparing cup 9 may be provided with the lip 25. The first teat-preparing cup 8 just have the opening 26 to give the teat access to the inner space 10.

The lip 25 may be replaced by an inflatable ring pad surrounding the opening 26. The ring pad may be inflated to seal against the teat 11, 12 introduced through the opening 26 into the inner space 10 of the second teat-preparing cup 9, and possibly also of the first teat-preparing cup 8.

During preparation, a teat 11, 12 is received in the inner space 10. The cleaning liquid is supplied from the container 21 via the supply hose 19 and fed into the intermediate space 17. From the intermediate space 17, the cleaning liquid is injected towards and onto the teat 11, 12 in the inner space 10 via the plurality of nozzles 16. At the same time, the used cleaning liquid, is sucked from the inner space 10 via the discharge hose 22 to the cleaning device 20 and/or to a drainage. Possible fore-milk may also be sucked from the inner space 10. The fore-milk may be collected by suitable means of the cleaning device 20.

The preparation robot 3 comprises a camera 27, which is positioned and configured for viewing the first and second teat-preparing cups 8, 9 during the teat preparation, and especially during the attachment of the first and second teat-preparing cups 8, 9 to the respective teat 11, 12. The camera 27 may be mounted to the outer robot arm member 7. The camera 27 may communicate with a control unit 28 of the preparation robot 3, see Fig 2, or with a control unit for the teat preparation arrangement comprising the two preparation robots 3.

The first teat-preparing cup 8 is attached to the outer robot arm member 7 to be immovable in relation to the outer robot arm member 7 during operation of the preparation robot 3. The first teat-preparing cup 8 will thus be held in the same position at an outer end of the outer robot arm member 7 during the use of the preparation robot 3.

The second teat-preparing cup 9 is detachable from the outer robot arm member 7 to be movable in relation to the outer robot arm member 7 during at least a part of the operation of the preparation robot 3.

The second teat-preparing cup 9 may thus be held in a seat 30 at the outer end of the outer robot arm member 7, and may be detached from the seat 30. The second teat-preparing cup 9 is attached to a flexible line F. When detached from the outer robot arm member 7 and the seat 30, the second teat-preparing cup 9 is thus still connected to the outer robot arm member 7 via the flexible line F.

The flexible line F is extensible from and retractable to the outer robot arm member 7. The second teat-preparing cup 9, attached to the flexible line F, is thereby permitted to be movable between a proximate position in the seat 30 of the outer robot arm member 7, see Fig 2, and remote position at a distance from the seat 30, see Fig 4.

In the embodiments disclosed, the flexible line F comprises or is comprised by the supply hose 19 for supplying cleaning liquid to the second teat-preparing cup 9. The supply hose 19 may thus form a force-transmitting element of the flexible line F, which acts on the second teat-preparing cup 9 when the flexible line F, and thus the supply hose 19 is retracted and the second teat-preparing cup is moved to the proximate position in the seat 30 of the outer robot arm member 7.

The preparation robot 3 also comprises a drive mechanism 31 engaging the flexible line F. The drive mechanism 31 is configured to exert a force on the flexible line F to retract the flexible line F and to move the second teat-preparing cup 9 to the proximate position in the seat 30. The drive mechanism 31 may comprise a pulley 32 supported by a piston rod 33 of a cylinder 34. The cylinder 34 may comprise or be formed by a pneumatic or hydraulic cylinder or an electric linear motor.

The drive mechanism 31 communicates with the control unit 28 and may be activated to retract the flexible line F immediately after the preparation of the teat 11 has been finished.

The preparation robot 3 comprises two guide rollers 40, 41 provided at the outer end of the outer robot arm member 7. The flexible line F is held between the two guide rollers 40, 41 to permit the flexible line F to run between the guide rollers 40, 41 and to be extensible from and retractable to outer robot arm member 7.

The two guide rollers 40, 41 are rotatable around a respective roller axis. The two roller axes are parallel with each other and perpendicular, or substantially perpendicular, to the longitudinal central axis x, and to the direction of the flexible line F between the guide rollers 40, 41. When the first and second teat-preparing cups 8, 9 are attached to the respective teat 11, 12, the roller axes of the guide rollers 40, 41 have a horizontal, or substantially horizontal extension.

In the embodiments disclosed, two further guide rollers 42, 43 are provided outside the two guide rollers 40, 41. The further guide rollers are rotatable around a respective further roller axis being perpendicular to the roller axes of the guide rollers 40, 41. The flexible line F is held also between the two further guide rollers 42, 43 to permit the flexible line F to run between the further guide rollers 42, 43. When the first and second teat-preparing cups 8, 9 are attached to the respective teat 11, 12, the roller axes of the further guide rollers 42, 43 have a vertical, or substantially vertical extension.

It should be noted that it may be dispensed with at least one of the further guide rollers 42, 43, in particular the further guide roller 43 located more closely to the longitudinal central axis x of the outer robot arm member 7.

The preparation robot 3 may be operated as follows for preparing two of the teats 11, 12 of an animal to be milked with the aid of the control unit 28 and the camera 27. The preparation robot 3 moves the outer robot arm member 7 with the first and second teat-preparing cups 8, 9 attached at the outer end of the outer robot arm member 7 to a position, in which the second teat-preparing cup 9 is located beneath one of teats 11. The outer robot arm member 7 is then moved upwards to attach the second teat-preparing cup 9 to said one of the teats 11. As soon as the second teat-preparing cup 9 has been attached to the teat 11, the second teat-preparing cup 9 is detached from the outer robot arm member 7 and from the seat 30.

This detachment from the outer robot arm member 7 is accomplished by moving the outer robot arm member 7 with the first teat-preparing cup 8 to a position at which the first teat-preparing cup 8 is located beneath another of the teats 12. During this movement of the outer robot arm member 7, the second teat-preparing cup 9 remains on the teat 11. The drive mechanism 31 is operated to permit the extension of the flexible line F. The remaining of the second teat-preparing cup 9 on the teat 11 is facilitated by the lip 25 which seals against the teat 11 enabling the creation of at least a slight under pressure in the inner space 10 thanks to the suction via the discharge hose 22.

When this position of the outer robot arm member 7 has been reached, the first teat-preparing cup 8 is moved upwards and attached to said another teat 12. The teats 11, 12 are then prepared, including for instance cleaning by means of the injection of cleaning liquid via the nozzles 16. When the preparation has been finished, the preparation robot 3 withdraws the outer robot arm member 7 from beneath the udder of the animal, whereby the first teat-preparing cup 8 is removed from said another teat 12. The drive mechanism 31 is activated to retracting the flexible line F and thus remove the second teat-preparing cup 9 from the teat 11 and move it back the seat 30 of the outer robot arm member 7.

The preparation robot 3 may thus prepare two of the teats 11, 12 of the animal. By means of the teat preparation arrangement disclosed in Fig 1, each of the two preparation robots 3 may simultaneously prepare two of the teats of a respective animal being present beside each other on the rotary platform 1. Thus a first one of the preparation robots 3 may prepare two of the teats of an animal, and the second of preparation robot 3 may thereafter prepare the two other teats of that animal.

The present invention is not limited to the embodiments disclosed but may be varied and modified within the scope of the following claims.

## Claims

1. A preparation robot (3) configured for preparing two of the teats (11) of an animal to be milked, wherein the preparation robot (3) comprises
a base (4),
a robot arm arrangement connected to and movable in relation to the base (4), wherein the robot arm arrangement comprises an outer robot arm member (7),
a first teat-preparing cup (8) comprising an inner space (10) for receiving one of the teats (11), and
a second teat-preparing cup (9) comprising an inner space (10) for receiving one of the teats (11), wherein the second teat-preparing cup (9) is detachable from the outer robot arm member (7) to be movable in relation to the outer robot arm member (7) during at least a part of the operation of the preparation robot (3),
**characterized in that** the first teat-preparing cup (8) is attached to the outer robot arm member (7) to be immovable in relation to the outer robot arm member (7) during operation of the preparation robot (3) for preparing of the teats (11),
wherein the preparing of the teats (11) comprises cleaning of the teats (11), and that
the second teat-preparing cup (9) is attached to a flexible line (F) and connected to the outer robot arm member (7) via the flexible line (F),
wherein the flexible line (F) is extensible from and retractable to the outer robot arm member (7), thereby permitting the second teat-preparing cup (9) to be movable between a proximate position in a seat (30) of the outer robot arm member (7) and remote position at a distance from the seat (30).

2. The preparation robot (3) according to claim 1, comprising a drive mechanism (31) engaging the flexible line (F) and configured to exert a force on the flexible line (F) to retract the flexible line (F) and move the second teat-preparing (9) cup to the proximate position in the seat (30).

3. The preparation robot (3) according to any one of the preceding claims, wherein the outer robot arm member (7) comprises two guide rollers (40, 41) at an outer end of the outer robot arm member (7) and wherein the flexible line (F) is held between the two guide rollers (40, 41) to permit the flexible line (F) to be extensible from and retractable to outer robot arm member (7).

4. The preparation robot (3) according to claim 3, wherein the two guide rollers (40, 41) are rotatable around a respective roller axis and wherein the two roller axes are parallel with each other.

5. The preparation robot (3) according to claim 4, wherein at least a further guide roller (42, 43) is provided outside the two guide rollers (40, 41) and wherein the further guide roller (42, 43) is rotatable around a further roller axis being perpendicular to the roller axes.

6. The preparation robot (3) according to any one of the preceding claims, wherein the flexible line comprises a hose (19) for supplying cleaning liquid to the second teat-preparing cup (9).

7. The preparation robot (3) according to any one of the preceding claims, wherein the first teat-preparing cup (8) and the second teat-preparing cup (9) are connected to a respective flexible discharge hose (22) for discharging liquid from the inner space (10) of the first teat-preparing cup (8) and the second teat-preparing cup (9), respectively.

8. The preparation robot (3) according to any one of the preceding claims, wherein at least the second teat-preparing cup (9) comprises a lip (25) delimiting an opening (26) to the inner space (10) and configured to seal around the teat (11) received in the inner space (10).

9. The preparation robot (3) according to any one of the preceding claims, wherein each of the first and second teat-preparing cups (8, 9) comprises an outer shell (15) and at least one nozzle being directed towards the inner space (10).

10. The preparation robot (3) according to claim 9, wherein each of the first and second teat-preparing cups (8, 9) comprises an inner shell (16) and an interspace (17) between the outer shell (15) and inner shell (16), wherein the inner shell (16) comprises a plurality of apertures (18) each forming one of said nozzles.

11. The preparation robot (3) according to any one of the preceding claims, further comprising a camera (27) configured for viewing the first and second teat-preparing cups (8, 9) and communicating with a control unit (28) of the preparation robot (3).

12. A teat preparation arrangement comprising two preparation robots (3) according to any one of the preceding claims, wherein the preparation robots (3) are arranged beside each other to enable simultaneous preparation of two of the teats (11, 12) of a respective animal being present beside each other on a rotary platform (1) of a milking parlour.

13. A method of preparing teats of an animal to be milked by means of a preparation robot (3) according to any one of the preceding claims, wherein the method comprises the steps of:
moving the outer robot arm member (7) with the first and second teat-preparing cups (8, 9) to position the second teat-preparing cup (9) beneath one of teats (11),
attaching the second teat-preparing cup (9) to said one of the teats (11),
detaching the second teat-preparing cup (9) from the outer robot arm member (7) and moving the outer robot arm member (7) with the first teat-preparing cup (8) to position the first teat-preparing cup (8) beneath another of the teats (11),
attaching the first teat-preparing cup (8) to said another teat (11), preparing the teats (11) attached to the second teat-preparing cup (9) and first teat-preparing cup (8), respectively, wherein the first teat-preparing cup (8) is attached to the outer robot arm member (7) to be immovable in relation to the outer robot arm member (7) during operation of the preparation robot (3) for - preparing of the teats (11), wherein the preparing of the teats (11) comprises cleaning of the teats (11), and withdrawing the outer robot arm member (7) thereby removing the first and second teat-preparing cups (8, 9) from the respective teat (11) and retracting the second teat-preparing cup (9) to a seat (30) of the outer robot arm member (7).

## Patentansprüche

1. Vorbereitungsroboter (3), der zum Vorbereiten von zwei der Zitzen (11) eines zu melkenden Tieres konfiguriert ist, wobei der Vorbereitungsroboter (3) umfasst
eine Basis (4), eine Roboterarmanordnung, die mit der Basis (4) verbunden und in Bezug darauf bewegbar ist, wobei die Roboterarmanordnung ein äußeres Roboterarmelement (7) umfasst,
einen ersten Zitzenvorbereitungsbecher (8), umfassend einen Innenraum (10) zum Aufnehmen einer der Zitzen (11), und
einen zweiten Zitzenvorbereitungsbecher (9), umfassend einen Innenraum (10) zum Aufnehmen einer der Zitzen (11), wobei der zweite Zitzenvorbereitungsbecher (9) von dem äußeren Roboterarmelement (7) abnehmbar ist, um während mindestens eines Teils des Betriebs des Vorbereitungsroboters (3) in Bezug auf das äußere Roboterarmelement (7) bewegbar zu sein,
**dadurch gekennzeichnet, dass** der erste Zitzenvorbereitungsbecher (8) während des Betriebs des Vorbereitungsroboters (3) zum Vorbereiten der Zitzen (11) an dem äußeren Roboterarmelement (7) befestigt ist, um in Bezug auf das äußere Roboterarmelement (7) unbewegbar zu sein,
wobei das Vorbereiten der Zitzen (11) ein Reinigen der Zitzen (11) umfasst, und **dass**
der zweite Zitzenvorbereitungsbecher (9) an einer flexiblen Leitung (F) befestigt und über die flexible Leitung (F) mit dem äußeren Roboterarmelement (7) verbunden ist,
wobei die flexible Leitung (F) von dem äußeren Roboterarmelement (7) ausziehbar und dorthin zurückziehbar ist, wodurch ermöglicht wird, dass der zweite Zitzenvorbereitungsbecher (9) zwischen einer nahegelegenen Position in einem Sitz (30) des äußeren Roboterarmelements (7) und einer entfernten Position in einem Abstand von dem Sitz (30) bewegbar ist.

2. Vorbereitungsroboter (3) nach Anspruch 1, umfassend
einen Antriebsmechanismus (31), der mit der flexiblen Leitung (F) in Eingriff steht und konfiguriert ist, um eine Kraft auf die flexible Leitung (F) auszuüben, um die flexible Leitung (F) zurückzuziehen und den zweiten Zitzenvorbereitungsbecher (9) in die nahegelegene Position in dem Sitz (30) zu bewegen.

3. Vorbereitungsroboter (3) nach einem der vorstehenden Ansprüche, wobei das äußere Roboterarmelement (7) zwei Führungsrollen (40, 41) an einem äußeren Ende des äußeren Roboterarmelements (7) umfasst und wobei die flexible Leitung (F) zwischen den zwei Führungsrollen (40, 41) gehalten wird, um zu ermöglichen, dass die flexible Leitung (F) aus dem äußeren Roboterarmelement (7) ausziehbar und dorthin zurückziehbar ist.

4. Vorbereitungsroboter (3) nach Anspruch 3, wobei die zwei Führungsrollen (40, 41) um eine jeweilige Rollenachse drehbar sind und wobei die zwei Rollenachsen parallel zueinander verlaufen.

5. Vorbereitungsroboter (3) nach Anspruch 4, wobei außerhalb der zwei Führungsrollen (40, 41) mindestens eine weitere Führungsrolle (42, 43) bereitgestellt ist und wobei die weitere Führungsrolle (42, 43) um eine weitere Rollenachse drehbar ist, die senkrecht zu den Rollenachsen ist.

6. Vorbereitungsroboter (3) nach einem der vorstehenden Ansprüche, wobei die flexible Leitung einen Schlauch (19) zum Zuführen von Reinigungsflüssigkeit zu dem zweiten Zitzenvorbereitungsbecher (9) umfasst.

7. Vorbereitungsroboter (3) nach einem der vorstehenden Ansprüche, wobei der erste Zitzenvorbereitungsbecher (8) und der zweite Zitzenvorbereitungsbecher (9) mit jeweils einem flexiblen Abflussschlauch (22) zum Ablassen von Flüssigkeit aus dem Innenraum (10) des ersten Zitzenvorbereitungsbechers (8) beziehungsweise des zweiten Zitzenvorbereitungsbechers (9) verbunden sind.

8. Vorbereitungsroboter (3) nach einem der vorstehenden Ansprüche, wobei mindestens der zweite Zitzenvorbereitungsbecher (9) eine Lippe (25) umfasst, die eine Öffnung (26) zu dem Innenraum (10) begrenzt und konfiguriert ist, um die Zitze (11) abzudichten, die in dem Innenraum (10) aufgenommen wird.

9. Vorbereitungsroboter (3) nach einem der vorstehenden Ansprüche, wobei jeder des ersten und des zweiten Zitzenvorbereitungsbechers (8, 9) eine Außenhülle (15) und mindestens eine Düse umfasst, die in Richtung des Innenraums (10) gerichtet ist.

10. Vorbereitungsroboter (3) nach Anspruch 9, wobei jeder des ersten und des zweiten Zitzenvorbereitungsbechers (8, 9) eine innere Hülle (16) und einen Zwischenraum (17) zwischen der äußeren Hülle (15) und der inneren Hülle (16) umfasst, wobei die innere Hülle (16) eine Vielzahl von Öffnungen (18) umfasst, die jeweils eine der Düsen ausbilden.

11. Vorbereitungsroboter (3) nach einem der vorstehenden Ansprüche, ferner umfassend eine Kamera (27), die zum Betrachten des ersten und des zweiten Zitzenvorbereitungsbechers (8, 9) konfiguriert ist und mit einer Steuereinheit (28) des Vorbereitungsroboters (3) kommuniziert.

12. Zitzenvorbereitungsanordnung, umfassend zwei Vorbereitungsroboter (3) nach einem der vorstehenden Ansprüche, wobei die Vorbereitungsroboter (3) nebeneinander angeordnet sind, um eine gleichzeitige Vorbereitung von zwei der Zitzen (11, 12) eines jeweiligen Tieres zu ermöglichen, die nebeneinander auf einer Drehplattform (1) eines Melkstandes anwesend sind.

13. Verfahren zum Vorbereiten der Zitzen eines zu melkenden Tieres mittels eines Vorbereitungsroboters (3) nach einem der vorstehenden Ansprüche, wobei das Verfahren die Schritte umfasst: Bewegen des äußeren Roboterarmelements (7) mit dem ersten und dem zweiten Zitzenvorbereitungsbecher (8, 9), um den zweiten Zitzenvorbereitungsbecher (9) unter einer der Zitzen (11) zu positionieren,
Befestigen des zweiten Zitzenvorbereitungsbechers (9) an der einen Zitze (11),
Abnehmen des zweiten Zitzenvorbereitungsbechers (9) von dem äußeren Roboterarmelement (7) und Bewegen des äußeren Roboterarmelements (7) mit dem ersten Zitzenvorbereitungsbecher (8), um den ersten Zitzenvorbereitungsbecher (8) unter einer anderen Zitze (11) zu positionieren,
Befestigen des ersten Zitzenvorbereitungsbechers (8) an der anderen Zitze (11),
Vorbereiten der Zitzen (11), die an dem zweiten Zitzenvorbereitungsbecher (9) beziehungsweise dem ersten Zitzenvorbereitungsbecher (8) befestigt sind, wobei der erste Zitzenvorbereitungsbecher (8) an dem äußeren Roboterarmelement (7) befestigt ist, um während des Betriebs des Vorbereitungsroboters (3) zum Vorbereiten der Zitzen (11) in Bezug auf das äußere Roboterarmelement (7) unbewegbar zu sein, wobei das Vorbereiten der Zitzen (11) das Reinigen der Zitzen (11) umfasst, und
Lösen des äußeren Roboterarmelements (7), wodurch der erste und der zweite Zitzenvorbereitungsbecher (8, 9) von der jeweiligen Zitze (11) entfernt werden, und Zurückziehen des zweiten Zitzenvorbereitungsbechers (9) in einen Sitz (30) des äußeren Roboterarmelements (7).

## Revendications

1. Robot de préparation (3) configuré pour préparer deux des trayons (11) d'un animal à traire, dans lequel le robot de préparation (3) comprend
une base (4), un dispositif de bras de robot relié à la base (4) et mobile par rapport à celle-ci, dans lequel le dispositif de bras de robot comprend un élément externe de bras de robot (7),
un premier gobelet de préparation de trayon (8) comprenant un espace interne (10) destiné à recevoir l'un des trayons (11), et
un second gobelet de préparation de trayon (9) comprenant un espace interne (10) destiné à recevoir l'un des trayons (11), dans lequel le second gobelet de préparation de trayon (9) peut être détaché de l'élément externe de bras de robot (7) pour être déplacé par rapport à l'élément externe de bras de robot (7) pendant au moins une partie de l'opération du robot de préparation (3),
**caractérisé en ce que** le premier gobelet de préparation de trayon (8) est attaché à l'élément externe de bras de robot (7) pour être immobile par rapport à l'élément externe de bras de robot (7) pendant le fonctionnement du robot de préparation (3) pour la préparation des trayons (11),
dans lequel la préparation des trayons (11) comprend le nettoyage des trayons (11), et **en ce que**
le second gobelet de préparation de trayon (9) est attaché à une ligne flexible (F) et relié à l'élément externe de bras de robot (7) par l'intermédiaire de la ligne flexible (F),
dans lequel la ligne flexible (F) est extensible et rétractable à partir de l'élément externe de bras de robot (7), permettant ainsi au second gobelet de préparation de trayon (9) d'être déplacé entre une position proche dans un siège (30) de l'élément externe de bras de robot (7) et une position éloignée à une certaine distance du siège (30).

2. Robot de préparation (3) selon la revendication 1, comprenant
un mécanisme d'entraînement (31) venant en prise avec la ligne flexible (F) et conçu pour exercer une force sur la ligne flexible (F) afin de rétracter la ligne flexible (F) et de déplacer le second gobelet de préparation de trayon (9) vers la position proche dans le siège (30).

3. Robot de préparation (3) selon l'une quelconque des revendications précédentes, dans lequel l'élément externe de bras de robot (7) comprend deux rouleaux de guidage (40, 41) au niveau d'une extrémité externe de l'élément externe de bras de robot (7) et dans lequel la ligne flexible (F) est maintenue entre les deux rouleaux de guidage (40, 41) pour permettre à la ligne flexible (F) d'être extensible et rétractable à partir de l'élément externe de bras de robot (7).

4. Robot de préparation (3) selon la revendication 3, dans lequel les deux rouleaux de guidage (40, 41) peuvent tourner autour d'un axe de rouleau respectif et dans lequel les deux axes de rouleau sont parallèles l'un à l'autre.

5. Robot de préparation (3) selon la revendication 4, dans lequel au moins un autre rouleau de guidage (42, 43) est prévu à l'extérieur des deux rouleaux de guidage (40, 41) et dans lequel l'autre rouleau de guidage (42, 43) peut tourner autour d'un autre axe de rouleau perpendiculaire aux axes de rouleau.

6. Robot de préparation (3) selon l'une quelconque des revendications précédentes, dans lequel la ligne flexible comprend un tuyau (19) permettant d'alimenter en liquide de nettoyage le second gobelet de préparation de trayon (9).

7. Robot de préparation (3) selon l'une quelconque des revendications précédentes, dans lequel le premier gobelet de préparation de trayon (8) et le second gobelet de préparation de trayon (9) sont reliés à un tuyau d'évacuation flexible respectif (22) permettant d'évacuer du liquide de l'espace interne (10) du premier gobelet de préparation de trayon (8) et du second gobelet de préparation de trayon (9), respectivement.

8. Robot de préparation (3) selon l'une quelconque des revendications précédentes, dans lequel au moins le second gobelet de préparation de trayon (9) comprend une lèvre (25) délimitant une ouverture (26) vers l'espace interne (10) et conçue pour assurer l'étanchéité autour du trayon (11) reçu dans l'espace interne (10).

9. Robot de préparation (3) selon l'une quelconque des revendications précédentes, dans lequel chacun des premier et second gobelets de préparation de trayon (8, 9) comprend une coque externe (15) et au moins une buse dirigée vers l'espace interne (10).

10. Robot de préparation (3) selon la revendication 9, dans lequel chacun des premier et second gobelets de préparation de trayon (8, 9) comprend une coque interne (16) et un espace intermédiaire (17) entre la coque externe (15) et la coque interne (16), dans lequel la coque interne (16) comprend une pluralité d'ouvertures (18) formant chacune l'une desdites buses.

11. Robot de préparation (3) selon l'une quelconque des revendications précédentes, comprenant en outre une caméra (27) configurée pour visualiser les premier et second gobelets de préparation de trayon (8, 9) et communiquer avec une unité de commande (28) du robot de préparation (3).

12. Dispositif de préparation de trayon comprenant deux robots de préparation (3) selon l'une quelconque des revendications précédentes, dans lequel les robots de préparation (3) sont disposés l'un à côté de l'autre pour permettre une préparation simultanée de deux des trayons (11, 12) d'un animal respectif se trouvant l'un à côté de l'autre sur une plate-forme rotative (1) d'une salle de traite.

13. Procédé de préparation de trayons d'un animal à traire au moyen d'un robot de préparation (3) selon l'une quelconque des revendications précédentes, dans lequel le procédé comprend les étapes consistant à :
déplacer l'élément externe de bras de robot (7) avec les premier et second gobelets de préparation de trayon (8, 9) afin de positionner le second gobelet de préparation de trayon (9) en dessous d'un trayon parmi les trayons (11),
attacher le second gobelet de préparation de trayon (9) audit trayon parmi les trayons (11),
détacher le second gobelet de préparation de trayon (9) de l'élément externe de bras de robot (7) et déplacer l'élément externe de bras de robot (7) avec le premier gobelet de préparation de trayon (8) afin de positionner le premier gobelet de préparation de trayon (8) en dessous d'un autre trayon parmi les trayons (11),
attacher le premier gobelet de préparation de trayon (8) audit autre trayon (11),
préparer les trayons (11) attachés au second gobelet de préparation de trayon (9) et au premier gobelet de préparation de trayon (8), respectivement, dans lequel le premier gobelet de préparation de trayon (8) est attaché à l'élément externe de bras de robot (7) afin d'être immobile par rapport à l'élément externe de bras de robot (7) pendant le fonctionnement du robot de préparation (3) pour la préparation des trayons (11), dans lequel la préparation des trayons (11) comprend le nettoyage des trayons (11), et
retirer l'élément externe de bras de robot (7), permettant ainsi de retirer les premier et second gobelets de préparation de trayon (8, 9) du trayon respectif (11) et de rétracter le second gobelet de préparation de trayon (9) dans un siège (30) de l'élément externe de bras de robot (7).
